(19) Europäisches Patentamt
European Patent Office
Office européen des brevets

(11) **EP 2 662 972 B1**

(12) **EUROPÄISCHE PATENTSCHRIFT**

(45) Veröffentlichungstag und Bekanntmachung des Hinweises auf die Patenterteilung:
**11.12.2019 Patentblatt 2019/50**

(51) Int Cl.:
*H02P 6/00* (2016.01)  *H02P 23/14* (2006.01)

(21) Anmeldenummer: **12166943.6**

(22) Anmeldetag: **07.05.2012**

(54) **Verfahren zum Betreiben eines Elektromotors eines medizinischen Instruments und zahnmedizinisches System**

Method for operating an electric motor of a medical instrument and dental system

Procédé de fonctionnement d'un moteur électrique d'un instrument médical et système de médecine dentaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.11.2013 Patentblatt 2013/46**

(73) Patentinhaber: **Kaltenbach & Voigt GmbH**
**88400 Biberach (DE)**

(72) Erfinder: **Bürk, Richard**
**88433 Alberweiler (DE)**

(74) Vertreter: **Thun, Clemens**
**Mitscherlich PartmbB**
**Patent- und Rechtsanwälte**
**Sonnenstraße 33**
**80331 München (DE)**

(56) Entgegenhaltungen:
**EP-A1- 2 030 588    EP-A1- 2 290 808**
**EP-A1- 2 421 146    DE-A1-102007 020 068**

EP 2 662 972 B1

**Beschreibung**

Die Erfindung betrifft ein Verfahren zum Betreiben eines Elektromotors eines medizinischen Instruments, welches Mittel zur Aufnahme eines von dem Motor angetriebenen Werkzeugs aufweist. Bei dem medizinischen Instrument kann es sich insbesondere um ein dentales Chirurgiegerät oder um ein so genanntes Endodontiegerät handeln. Ferner betrifft die vorliegende Erfindung ein zahnärztliches System mit einem entsprechenden Instrument.

Zahnärztliche Instrumente werden oftmals hinsichtlich der Art des Antriebs, der in dem Instrument zum Einsatz kommt, unterschieden. Während früher primär Instrumente mit einem Turbinenantrieb im Einsatz waren, finden zunehmend auch Instrumente mit einem elektrischen Antrieb Verwendung, da auch bei einem derartigen Antrieb mittlerweile Drehzahlen erreicht werden können, wie sie für die entsprechenden Behandlungen in zahnärztlichen Praxen erforderlich sind. Ein Vorteil von dentalen Geräten mit elektrischen Antrieben besteht ferner auch darin, dass durch eine entsprechende Steuerung des Motors die Drehzahl und das Drehmoment genau eingestellt werden können.

Insbesondere bei dentalen Geräten, die in der Implantologie zum Einsatz kommen, ist es extrem wichtig, dass das von dem Werkzeug des Instruments abgegebene bzw. ausgeübte Drehmoment sehr genau eingestellt wird. Derartige Chirurgiegeräte kommen beispielsweise zum Schneiden von Gewinden zum Einsatz, mit deren Hilfe später Implantate in einen Knochen eingeschraubt werden. Für die spätere Funktionalität des Implantats ist es unerlässlich, dass das entsprechende Gewinde zur Verankerung des Implantats fehlerfrei ist, was wiederum nur dann gewährleistet ist, wenn während des Gewindeschneidens das von dem entsprechenden Werkzeug auf den Knochen ausgeübte Drehmoment innerhalb fest vorgegebener Grenzen bleibt. Dementsprechend ist es insbesondere in derartigen Anwendungsfällen unerlässlich, das Instrument mit dem entsprechend aufgenommenen Werkzeug exakt anzusteuern, was letztendlich nur durch den Einsatz von elektrischen Antrieben möglich ist.

Auch die in diesem Fall eingesetzten Elektromotoren können allerdings hinsichtlich des abgegebenen Drehmoments einer gewissen Streuung unterliegen, was auf nicht zu beherrschende Effekte während der Herstellung des Motors zurückzuführen ist. Zwar könnten entsprechende Korrekturinformationen unmittelbar nach Herstellung des Elektromotors erfasst und bei der späteren Ansteuerung berücksichtigt werden, in der Realität ist dies jedoch nicht praktikabel, da diese Korrekturwerte motorspezifisch sind und unterschiedliche Motoren gleichen Typs an einer Steuereinheit betrieben werden können. Beispielsweise soll ein Motor genutzt werden können, während zeitgleich der zuvor genutzte Motor gleichen Typs sterilisiert wird. Weiterhin muss damit gerechnet werden, dass sich das von einem Motor im Laufe der Zeit bei bestimmten Betriebspunkten abgegebene Drehmoment verändert. Auch während der späteren Nutzung des medizinischen Instruments ist dementsprechend eine regelmäßige Kalibrierung des Elektromotors unerlässlich.

Die Dokumente DE102007020068, EP2030588 und EP2421146 gehören zum Stand der Technik.

Aus dem Stand der Technik sind verschiedene Lösungen zur Kalibrierung eines Elektromotors auf dem dentalmedizinischen Gebiet bekannt. Ein gängiges Verfahren besteht beispielsweise darin, dass der Motor bzw. das mit dem Motor bestückte Instrument mit einem Kalibriersystem, welches ein mechanisches Bremssystem aufweist, verbunden und ein Kalibrierlauf durchgeführt wird. Das mechanische Bremssystem weist beispielsweise eine Reibbremse, eine Viskobremse oder eine Hysteresebremse auf, auch sind aufwendigere Systeme mit einem elektromechanischen Bremssystem oder einer Wirbelstrombremse bekannt. Während der Kopplung des medizinischen Instruments mit dem Bremssystem ist also bekannt, welches Drehmoment von dem Instrument abgegeben wird. Aufgrund der währenddessen erfassten Betriebsparameter des Motors können dann Korrekturfaktoren ermittelt werden, welche während des späteren Betriebs zur Korrektur herangezogen werden, um sicherzustellen, dass das von dem Instrument insgesamt abgegebene Moment einem gewünschten Wert entspricht.

Derartige Kalibrierverfahren sind derzeit weit verbreitet. Allerdings hat sich als nachteilig herausgestellt, dass es sich hierbei um einen zusätzlichen manuell durchzuführenden Arbeitsschritt handelt, der immer etwas Zeit benötigt. Deutlich problematischer ist darüber hinaus, dass die Kalibrierung nicht mit dem für die spätere Behandlung verwendeten Werkzeug durchgeführt werden kann, da die Kalibriersysteme üblicherweise nicht steril bzw. sterilisierbar sind und dementsprechend bei diesem Kalibriervorgang die Sterilität des Instruments und Motors, insbesondere jedoch des Werkzeugs verloren gehen würde. D.h., bei diesen bislang genutzten Kalibriersystemen, welche in der Regel ein separates Gerät darstellten, war letztendlich doch immer wieder eine gewisse Unsicherheit hinsichtlich des später tatsächlich ausgeübten Drehmoments vorhanden. Trotzallem ist eine zuverlässige und regelmäßige Kalibrierung des elektrischen Antriebs unerlässlich, da - wie oben bereits angedeutet - die verwendeten Motoren aufgrund der Materialstreuungen einer gewissen Toleranz bezüglich des Magnetsystems unterliegen und die Instrumente je nach Alter und Pflegezustand unterschiedliche Reibungen aufweisen. Darüber hinaus erfolgt eine Ansteuerung des Motors in der Regel durch das zahnärztliche Behandlungsgerät, also die Dentaleinheit, an welche oft nacheinander mehrere Motoren gleichen Typs angeschlossen werden, da die zuvor genutzten Motoren beispielsweise zwischenzeitlich gereinigt und/oder sterilisiert werden müssen. Dementsprechend ist es für eine exakte und zuverlässige Funktion unerlässlich, dass jeweils vor Beginn einer einzelnen Behandlung eine schnelle aber genau durchzuführende Kalibrierung vorgenommen wird.

Der vorliegenden Erfindung liegt dementsprechend die Aufgabe zugrunde, eine neue Möglichkeit anzugeben, elektrische Antriebe in dentalen Geräten sehr schnell, einfach und trotzallem genau zu kalibrieren.

Die Aufgabe wird durch ein Verfahren mit den Merkmalen des Anspruchs 1 sowie durch ein zahnmedizinisches System gemäß Anspruch 11 gelöst. Vorteilhafte Weiterbildungen der Erfindung sind Gegenstand der abhängigen Ansprüche.

Das erfindungsgemäße Verfahren erlaubt es, die Kalibrierung automatisch vor Beginn der Behandlung und insbesondere mit dem unmittelbar beispielsweise zur Implantation vorgesehenen System durchzuführen, ohne dass hierbei die Sterilität des Systems beeinträchtigt wird. Weiterhin werden für das erfindungsgemäße Verfahren keine zusätzlichen mechanischen Hilfsmittel, also Bremsen oder dergleichen benötigt. Die Kalibrierung erfolgt komfortabel innerhalb relativ kurzer Zeit und gewährleistet eine sehr exakte spätere Ansteuerung des Motors.

Dabei ist erfindungsgemäß vorgesehen, dass während eines Kalibrierschritts des medizinischen Instruments der Motor mit dem darin aufgenommenen Werkzeug bei zumindest einem Betriebspunkt betrieben wird und für diesen Betriebspunkt folgende Parameter bestimmt werden:

- die Generatorspannung bzw. EMK des Motors,
- die Drehzahl des Motors sowie
- die Leerlaufstromaufnahme des Motors.

Basierend auf diesen gemessenen Parametern wird dann ein Leerlaufreibmoment für das Instrument berechnet, welches während des späteren Betriebs als Korrekturfaktor bei der Ansteuerung des Motors berücksichtigt wird.

Dabei ist ferner erfindungsgemäß vorgesehen, dass während des Kalibrierschritts der Motor bei mehreren Betriebspunkten betrieben wird und hierbei jeweils dann die drei oben erwähnten Parameter bestimmt werden. Auf Basis der bei den verschiedenen Betriebspunkten erfassten Parameter wird dann ein drehzahlabhängiges Leerlaufreibmoment berechnet, wodurch die nachfolgend erzielte Ansteuerung des Elektromotors optimiert wird.

Die Besonderheit des erfindungsgemäßen Verfahrens besteht darin, dass dieses vollautomatisch durch das System selbst durchgeführt werden kann und insbesondere keine externen Messeinrichtungen, welche eine mechanische Kopplung des Geräts erfordern, zu verwenden sind. Eine durch den Benutzer des Geräts hervorgerufene fehlerhafte Kalibrierung kann dementsprechend ausgeschlossen werden. Insbesondere ist allerdings - wie bereits erwähnt - sichergestellt, dass die Sterilität des Geräts nicht beeinträchtigt wird.

Zur Berechnung des Leerlaufreibmoments kann dabei zunächst die so genannte Motormomentenkonstante bestimmt werden, was beispielsweise auf Basis des in der WO 2008/135138 A1 der Anmelderin beschriebenen Verfahrens erfolgen kann. Durch Rückrechnen mittels der Leerlaufstromaufnahme kann dann das Leerlaufreibmoment des Instruments bzw. des gesamten Systems sehr einfach und schnell ermittelt werden. Die hierbei gewonnenen Daten werden wie bereits erwähnt bei der späteren Regelung des Motors berücksichtigt und ermöglichen eine Eliminierung der Toleranzen des Motors bezüglich der Momentenerzeugung sowie der Reibungen in Instrument und Motor. In allen späteren Betriebspunkten ist somit eine sehr genaue und exakte Drehmomentregelung vorhanden.

Eine Weiterbildung des erfindungsgemäßen Verfahrens besteht auch darin, dass die während des Kalibrierschritts gemessenen und ermittelten Daten, insbesondere die Generatorspannung des Motors, die Motormomentenkonstante und/oder das daraus berechnete Reibmoment einer Plausibilitätsprüfung unterzogen werden. Hierbei werden also die gemessenen und rechnerisch bestimmten Parameter mit Daten, die vorab zur Verfügung gestellt werden, verglichen. Dies ist möglich, da der Bereich der Motormomentenkonstante sowie der zulässigen Reibmomente dem Hersteller bekannt sind und die während des Kalibrierschritts berechneten Parameter nicht zu stark von den Ursprungswerten abweichen sollten. Sollte dies jedoch der Fall sein, kann dann der Anwender darauf hingewiesen werden und beispielsweise dazu aufgefordert werden, die Kalibrierung zu wiederholen, wobei dieser Schritt ggf. auch automatisch erfolgen kann. Sollten hingegen keine plausiblen Werte für die Motormomentenkonstante und/oder das Reibmoment ermittelt werden bzw. die Parameter außerhalb zulässiger Bereich liegen, kann der Anwender im Rahmen einer Warn- oder Fehlermeldung darauf hingewiesen werden, dass der Motor bzw. das Instrument mit dem Motor auf seine korrekte Funktion überprüft werden sollte, bevor dieses verwendet wird. Ggf. könnte in diesem Fall sogar der Betrieb des Instruments verhindert werden. Insbesondere diese automatische Kalibrierung in Verbindung mit der Plausibilitätsprüfung bietet nochmals eine besondere Zuverlässigkeit, da die korrekte Funktion des ganzen Systems unmittelbar vor der Anwendung nochmals überprüft wird. Ein defektes Instrument, welches später während der Behandlung verwendet wird, könnte hingegen zu gravierenden Schäden am Knochen des Patienten oder dergleichen führen, was durch das erfindungsgemäße Verfahren ausgeschlossen wird.

Nachfolgend soll die Erfindung anhand der beiliegenden Zeichnung näher erläutert werden. Es zeigen:

Figur 1    ein erfindungsgemäßes dentales System mit einem Behandlungsinstrument sowie einer zum Ansteuern des Instruments vorgesehenen Steuereinheit und

Figur 2    schematisch die Vorgehensweise zum Bestimmen eines drehzahlabhängigen Leerlaufreibmoments.

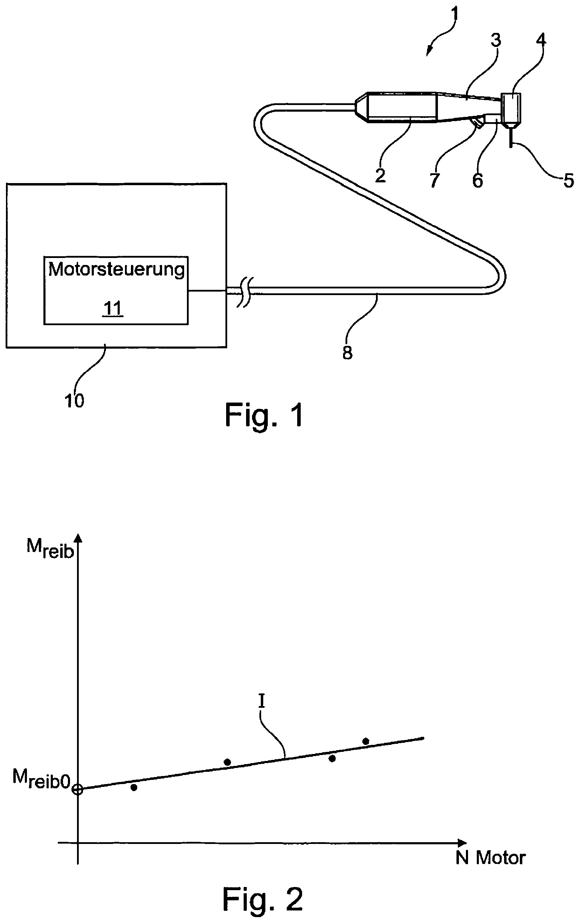

Figur 1 zeigt ein erfindungsgemäßes System bestehend aus einem mit dem Bezugszeichen 1 versehenen Dentalinstrument sowie einer zur Versorgung und zur Steuerung des Instruments 1 vorgesehenen Versorgungs-/Steuereinheit 10. Das Dentalinstrument 1 weist als Antriebseinheit einen Elektromotor 2 auf, wobei ein vorderer Handstückteil 3 auf den Elektromotor 2 aufgesetzt ist und einen Kopfbereich 4 mit Mitteln zur Aufnahme eines Werkzeugs 5 aufweist. In der Nähe des Kopfbereichs 4 können sich an dem vorderen Handstückteil 3 eine die Instrumentenbeleuchtung bildende Lichtquelle 6 zur Beleuchtung der Behandlungsstelle und ggf. auch Abgabemittel 7 zum Abgeben von Luft und/oder Wasser befinden.

Das Instrument 1 ist über einen Versorgungsschlauch 8 mit der Versorgungs-/Steuereinheit 10 verbunden, wobei über den Versorgungsschlauch 8 für den Betrieb des Instruments 1 erforderliche Medien, insbesondere Strom zugeführt werden. Ggf. kann über den Schlauch 8 auch das Zuführen von Luft, Wasser und/oder Licht vorgenommen werden.

Zentrales Element im Hinblick auf die Ansteuerung des Motors 2 ist dabei ein in der Einheit 10 befindliches Steuerteil 11, über das insbesondere die Motorspannung und der Motorstrom eingestellt werden. Diese Parameter erlauben ein Beeinflussen der Drehzahl des Motors 2 sowie des von dem Motor 2 erzeugten Drehmoments. Grundsätzlich ist bei allen dentalen Anwendungen gewünscht, dass die Ansteuerung des Motors 2 sehr exakt und genau entsprechend den Vorgaben des Benutzers erfolgt. Insbesondere für den Fall, dass es sich bei dem Instrument 1 um ein Chirurgiegerät handelt und beispielsweise das Werkzeug 5 zum Schneiden eines Gewindes zur späteren Verankerung von Implantatteilen im Kieferknochen vorgesehen ist, ist es von besonderer Bedeutung, dass der Motor 2 derart gesteuert wird, dass von dem Werkzeug 5 ein Drehmoment mit einem exakt vorgegebenen Wert ausgeübt wird. Mit dem nachfolgend beschriebenen erfindungsgemäßen Verfahren wird dies sichergestellt, wobei dieses Verfahren allerdings - wie oben bereits angedeutet - nicht nur bei chirurgischen Instrumenten sondern generell zum Einsatz kommen kann, wenn eine exakte Motorsteuerung gewünscht ist.

Voraussetzung für eine genaue Ansteuerung des Motors 2 ist die Kenntnis, inwiefern die verschiedenen Bestandteile des Systems bestehend aus dem Motor 2, dem zu dem Werkzeug 5 führenden - nicht dargestellten - Antriebsstrang sowie dem Werkzeug 5 selbst das von dem Werkzeug 5 abgegebene Drehmoment beeinflussen. Alterungseffekte und dergleichen können hierbei zu einem sogenannten Leerlaufreibmoment führen, welches bei der späteren Motorregelung berücksichtigt werden muss, da andernfalls das tatsächlich ausgeübte Drehmoment nicht dem gewünschten Wert entsprechen würde. Mit dem nunmehr beschriebenen erfindungsgemäßen Verfahren wird sichergestellt, dass unmittelbar vor Durchführung der Behandlung Informationen hinsichtlich der zu berücksichtigenden Korrekturfaktoren erhalten werden können, was sich dementsprechend positiv auf die genaue Regelung des Motors 2 auswirkt.

Dabei ist vorgesehen, dass unmittelbar vor Durchführung der Behandlung, also insbesondere auf Basis des vollständigen Systems bestehend aus Instrument 1 mit darin eingesetztem Werkzeug 5 ein Kalibrierschritt durchgeführt wird. Hierbei wird durch das Steuerteil 11 der Versorgungseinheit 10 der Motor 2 bei zumindest einem Betriebspunkt betrieben und es werden für diesen Betriebspunkt die drei folgenden Parameter bestimmt:

- die sich ergebende Generatorspannung ($U_{EMK}$) des Motors 2;
- die Drehzahl des Motors 2;
- die Leerlaufstromaufnahme des Motors.

Innerhalb des Steuerteils 11 der Versorgungs-/Steuereinheit 10 sind hierzu Mittel vorgesehen, welche für das entsprechende Erfassen dieser drei Parameter verantwortlich sind. Dabei können durch eine entsprechende Überwachung und Auswertung des in der Versorgungsleitung 8 für den Motor 2 fließenden Stroms sowie der anliegenden Spannung die drei genannten Parameter mit hoher Genauigkeit erfasst werden.

In einem darauffolgenden Schritt wird dann die so genannte Motormomentenkonstante berechnet, wobei hierzu beispielsweise auf das aus der WO 2008/135138 A1 beschriebene Verfahren zurückgegriffen werden kann. In dieser Schrift ist eine effektive Vorgehensweise zum Bestimmen der Motormomentenkonstante detailliert beschrieben, weshalb diese nachfolgend lediglich kurz zusammengefasst werden soll. So wird beispielsweise für den Fall, dass es sich bei dem Motor 2 um einen Gleichstrommotor handelt, der Motor vor Messung der Generatorspannung durch Anlegen einer Betriebsspannung hochgefahren. Die Betriebsspannung wird dann abgeschaltet und nach Abklingen des induktiven Betriebsstroms eine Messung der Generatorspannung $U_{EMK}$ sowie der Drehzahl $n_{Motor}$ vorgenommen. Auf Basis dieser beiden gemessenen Werte kann dann die Motormomentenkonstante $k_M$ nach folgender Formel berechnet werden:

$$k_M = \frac{U_{EMK}}{2\pi \cdot n_{Motor}}$$

Handelt es sich hingegen bei dem Motor um einen 3-Phasen-Synchronmotor, so wird zunächst der Motor ohne Belastung durch Anlegen einer Betriebsspannung hochgefahren. Anschließend wird die Betriebsspannung abgeschaltet und nach Abklingen des induktiven Betriebsstroms die Generatorspannung gemessen, wobei die Drehzahl gleichzeitig aus der Periodendauer der erzeugten Generatorspannung ermittelt werden kann. In diesem Fall kann also in besonders einfacher und eleganter Weise sowohl die Generatorspannung als auch die Drehzahl des Motors bestimmt werden. Die Motormomentenkonstante berechnet sich hierbei wie folgt:

$$k_M = \frac{U_{EMK}}{2\pi \cdot n_{Motor}} \cdot \sqrt{3}$$

Da wie oben erwähnt zusätzlich auch die Leerlaufstromaufuahme $I_{Motor}$ des Motors ermittelt wurde, kann dann das Reibmoment $M_{reib}$ des gesamten Systems, welches dem Motormoment $M_{mot}$ im Leerlauf entspricht, wie folgt berechnet werden:

$$M_{reib} = M_{mot} = k_M \cdot I_{Motor}$$

Bei einer einfachen Variante des erfindungsgemäßen Verfahrens wird dieses Reibmoment $M_{reib}$ als konstant angenommen und während des späteren Betriebs berücksichtigt. D.h., ist ein gewisser Sollwert für das von dem Werkzeug 5 abzugebende Drehmoment vorgegeben, so wird durch das Steuerteil 11 bei der Ansteuerung des Motors 2 berücksichtigt, dass zu diesem Sollwert noch das Reibmoment zugefügt werden muss, um den Motor 2 in entsprechend korrekter Weise anzusteuern.

Eine nochmals genauere Durchführung der Kalibrierung kann dadurch erhalten werden, dass in dem Kalibrierschritt der Motor 2 bei mehreren Betriebspunkten betrieben wird und für jeden der Betriebspunkte jeweils das Reibmoment entsprechend der oben beschriebenen Vorgehensweise - es wird also die Motormomentenkonstante bestimmt und darauf basierend das Reibmoment berechnet - ermittelt wird. Auf Basis der sich hierbei ergebenden Werte wird dann ein drehzahlabhängiges Leerlaufreibmoment $M_{reib}(n_{Motor})$ bestimmt, was schematisch in Figur 2 dargestellt ist.

Figur 2 zeigt hierbei vier Leerlaufreibmomentwerte, die bei vier verschiedenen Betriebspunkten, also vier verschiedenen Drehzahlwerten des Motors bestimmt wurden. Die Abhängigkeit des Leerlaufreibmoments von der Drehzahl kann dann durch eine entsprechende Ausgleichsgerade I, wie sie in Figur 2 dargestellt ist, angenähert werden. Verläuft diese Gerade unmittelbar durch den Ursprung, so ergibt sich für die Gerade I folgender Zusammenhang:

$$M_{reib}\left(n_{Motor}\right) = \mu_{reib} \cdot n_{Motor}$$

gemäß dem das drehzahlabhängige Reibmoment später berechnet wird.

Für den Fall hingegen, dass die Gerade - wie dargestellt - gegenüber dem Ursprung verschoben ist, ergibt sich ein weiterer Korrekturfaktor $M_{reib0}$ und das Leerlaufreibmoment berechnet sich wie folgt:

$$M_{reib}\left(n_{Motor}\right) = \mu_{reib} \cdot n_{Motor} + M_{reib0}$$

Bei der späteren Regelung des Motors während der Behandlung wird dann das auf diese Weise berechnete Reibmoment auf das von dem Anwender gewünschte Abgabemoment $M_{anwender}$ addiert, sodass sich für die Regelung des Motors folgender Zusammenhang ergibt:

$$M_{regel,Motor} = M_{anwender} + M_{reib}\left(n_{Motor}\right) = M_{anwender} + \mu_{reib} \cdot n_{Motor}$$

bzw. mit Grundverlust

$$M_{regel,Motor} = M_{anwender} + M_{reib}\left(n_{Motor}\right) = M_{anwender} + \mu_{reib} \cdot n_{Motor} + M_{reib0}$$

Das gewünschte Abgabedrehmoment $M_{anwender}$ wird hierbei durch den Benutzer vorgegeben und kann insbesondere auch noch spezielle Eigenschaften des Instruments, z.B. die Getriebeübersetzung und den Wirkungsgrad berücksichtigen.

Offensichtlich wird also durch die Bestimmung eines drehzahlabhängigen Leerlaufreibmoments die Genauigkeit bei der späteren Ansteuerung deutlich erhöht. Der dargestellte Fall der Nutzung einer Ausgleichsgeraden stellt hierbei die einfachste Vorgehensweise dar, wobei auch die Verwendung komplexerer Ausgleichsfunktionen, insbesondere von Polynomen höheren Gerades denkbar wäre.

Da der zuvor beschriebene Kalibrierprozess automatisch durch die Versorgungs-/Steuereinheit 10 durchgeführt wird, kann dieser Schritt sehr schnell und insbesondere ohne Zutun des Benutzers erfolgen. Fehlbedienungen sind hierbei also ausgeschlossen.

In einer Weiterbildung kann ferner vorgesehen sein, dass für den Fall, dass die gemessene Generatorspannung des Motors und/oder die berechneten Werte für die Motormomentenkonstante und das Reibmoment außerhalb zulässiger bzw. plausibler Bereiche liegen, automatisch eine Wiederholung der Kalibrierung durchgeführt wird. Im Falle, dass auch mehrere aufeinanderfolgende Kalibrierungen nicht zu einem vernünftigen bzw. plausiblen Ergebnis führen bzw. die Parameter außerhalb eines zulässigen Toleranzbereichs liegen, kann dann eine Warn- oder Fehlermeldung ausgegeben oder sogar der Betrieb des Motors bzw. des Instruments gesperrt werden. Hierdurch wird das Verwenden eines defekten Instruments nahezu ausgeschlossen. Dabei kann dieser Gedanke der Plausibilitätsprüfung insbesondere im Hinblick auf die Generatorspannung des Motors auch unabhängig von dem Gedanken der Kalibrierung des Systems vorgenommen werden, um allgemein bei medizinischen oder dentalmedizinischen Instrumenten deren Betriebssicherheit zu erhöhen.

Letztendlich kann durch die zuvor beschriebenen Maßnahmen die Betriebssicherheit des gesamten Systems nochmals deutlich erhöht werden. Von besonderem Vorteil ist hierbei auch, dass die Kalibrierung für das unmittelbar für die spätere Behandlung vorgesehene System durchgeführt werden kann und dementsprechend sehr exakte Informationen hinsichtlich der zu berücksichtigenden Korrekturfaktoren vorliegen.

## Patentansprüche

1. Verfahren zum Betreiben eines Elektromotors (2) eines medizinischen Instruments, welches Mittel zur Aufnahme eines von dem Motor (2) angetriebenen Werkzeugs (5) aufweist, insbesondere eines dentalen Chirurgiegeräts oder eines Endodontiegeräts, wobei während eines Kalibrierschritts der Motor (2) mit aufgenommenem Werkzeug (5) bei zumindest einem Betriebspunkt betrieben wird und für diesen Betriebspunkt folgende Parameter bestimmt werden:

   - die Generatorspannung ($U_{EMK}$) des Motors (2),
   - die Drehzahl ($n_{Motor}$) des Motors (2),
   - die Leerlaufstromaufhahme ($I_{Motor}$) des Motors (2),

   und wobei auf Basis der bestimmten Parameter ein Leerlaufreibmoment ($M_{reib}$) für das Instrument (1) berechnet wird, welches während des späteren Betriebs des Instruments (1) als Korrekturfaktur beim Ansteuern des Motors (2) berücksichtigt wird,
   wobei während des Kalibrierschritts der Motor (2) bei mehreren Betriebspunkten betrieben wird und auf Basis der bei den verschiedenen Betriebspunkten bestimmten Parametern ein drehzahlabhängiges Leerlaufreibmoment ($M_{reib}(n_{Motor})$) bestimmt wird, wobei das drehzahlabhängige Leerlaufreibmoment ($M_{reib}(n_{Motor})$) auf Basis einer Ausgleichskurve bestimmt wird.

2. Verfahren nach Anspruch 1,
   **dadurch gekennzeichnet,**
   **dass** es sich bei der Ausgleichskurve um eine Ausgleichsgerade handelt.

3. Verfahren nach Anspruch 1,
   **dadurch gekennzeichnet,**
   **dass** es sich bei der Ausgleichskurve um ein Polynom höheren Grades handelt.

4. Verfahren nach einem der Ansprüche 1 bis 3,
   **dadurch gekennzeichnet,**
   **dass** zur Berechnung des Leerlaufreibmoments ($M_{reib}$) zunächst die Motormomentenkonstante $k_M$ bestimmt wird.

5. Verfahren nach Anspruch 4,
   **dadurch gekennzeichnet,**
   **dass** im Falle eines Gleichstrommotors die Motormomentenkonstante $k_M$ nach folgender Formel berechnet wird:

$$k_M = \frac{U_{EMK}}{2\pi \cdot n_{Motor}}$$ wobei der Motor vor Messung der Generatorspannung durch Anlegen einer Betriebsspannung hochgefahren wird, die Betriebsspannung dann abgeschaltet wird und nach Abklingen des induktiven Betriebsstroms eine Messung der Generatorspannung $U_{EMK}$ sowie der Drehzahl $n_{Motor}$ vorgenommen wird.

6. Verfahren nach Anspruch 4,
   **dadurch gekennzeichnet,**
   **dass** im Falle eines 3-Phasen-Synchronmotors die Motormomentenkonstante $k_M$ nach folgender Formel berechnet wird: $k_M = \frac{U_{EMK}}{2\pi \cdot n_{Motor}} \cdot \sqrt{3}$ wobei zunächst der Motor ohne Belastung durch Anlegen einer Betriebsspannung hochgefahren und anschließend die Betriebsspannung abgeschaltet wird und nach Abklingen des induktiven Betriebsstroms die Generatorspannung $U_{EMK}$ gemessen wird, wobei die Drehzahl $n_{Motor}$ gleichzeitig aus der Periodendauer der erzeugten Generatorspannung ermittelt werden kann.

7. Verfahren nach einem der vorherigen Ansprüche,
   **dadurch gekennzeichnet,**
   **dass** die gemessene Generatorspannung ($U_{EMK}$) des Motors, das berechnete Leerlaufreibmoment und/oder ggf. die berechnete Motormomentenkonstante vor einer Benutzung des Instruments (1) einer Plausibilitätsprüfung unterzogen werden.

8. Verfahren nach Anspruch 7,
   **dadurch gekennzeichnet,**
   **dass** der Kalibriervorgang wiederholt wird, falls die Generatorspannung ($U_{EMK}$) des Motors, das ermittelte Leerlaufreibmoment und/oder die ggf. berechnete Motormomentenkonstante jeweils außerhalb eines zulässigen Bereichs liegen.

9. Verfahren nach einem der vorherigen Ansprüche,
   **dadurch gekennzeichnet,**
   **dass** eine Warn- oder Fehlermeldung ausgegeben wird, falls die Generatorspannung ($U_{EMK}$) des Motors, das berechnete Leerlaufreibmoment und/oder ggf. die berechnete Motormomentenkonstante außerhalb eines zulässigen Toleranzbereichs liegen.

10. Verfahren nach einem der vorherigen Ansprüche,
    **dadurch gekennzeichnet,**
    **dass** ein Betrieb des Instruments verhindert wird, falls die Generatorspannung ($U_{EMK}$) des Motors, das berechnete Leerlaufreibmoment und/oder ggf. die berechnete Motormomentenkonstante außerhalb eines zulässigen Toleranzbereichs liegen.

11. Zahnmedizinisches System bestehend aus

    • einem medizinischen Instrument (1) mit einem Elektromotor (2), welches Mittel zur Aufnahme eines von dem Motor (2) angetriebenen Werkzeugs (5) aufweist, sowie
    • einer Versorgungs-/Steuereinheit (10) zum Ansteuern des Elektromotors (2), wobei die Versorgungs-/Steuereinheit (10) Mittel aufweist, welche dazu ausgebildet sind

       a) während eines Kalibrierschritts den Motor (2) mit aufgenommenem Werkzeug (5) bei zumindest einem Betriebspunkt zu betreiben und für diesen Betriebspunkt folgende Parameter zu bestimmen:

          • die Generatorspannung ($U_{EMK}$) des Motors (2),
          • die Drehzahl ($n_{Motor}$) des Motors (2),
          • die Leerlaufstromaufnahme ($I_{Motor}$) des Motors (2),

       b) auf Basis der bestimmten Parameter ein Leerlaufreibmoment ($M_{reib}$) für das Instrument (1) zu berechnen und dieses während des späteren Betriebs des Instruments (1) als Korrekturfaktur beim Ansteuern des Motors (2) zu berücksichtigen,

wobei die Mittel der Versorgungs-/Steuereinheit (10) dazu ausgebildet sind, während des Kalibrierschritts den Motor (2) bei mehreren Betriebspunkten zu betreiben und auf Basis der bei den verschiedenen Betriebspunkten bestimmten Parametern ein drehzahlabhängiges Leerlaufreibmoment ($M_{reib}(n_{Motor})$) zu bestimmen, wobei das drehzahlabhängige Leerlaufreibmoment ($M_{reib}(n_{Motor})$) auf Basis einer Ausgleichskurve bestimmt wird.

**Claims**

1. Method for operating an electric motor (2) of a medical instrument that has means for receiving a tool (5) driven by the motor (2), in particular a dental surgical device or an endodontic device, wherein, during a step of calibrating the motor (2) with the received tool (5), operation is performed at at least one operating point and the following parameters are determined for this operating point:

   • the generator voltage ($U_{EMK}$) of the motor (2),
   • the rotational speed ($n_{Motor}$) of the motor (2),
   • the no-load current consumption ($I_{Motor}$) of the motor (2),

   and wherein a no-load frictional torque ($M_{reib}$) for the instrument (1) is calculated on the basis of the determined parameters, which no-load frictional torque is taken into account as a correction factor when driving the motor (2) during the subsequent operation of the instrument (1), wherein, during the step of calibrating the motor (2), operation is performed at a plurality of operating points and a rotational speed-dependent no-load frictional torque ($M_{reib}(n_{Motor})$) is determined on the basis of the parameters determined at the various operating points, wherein the rotational speed-dependent no-load frictional torque ($M_{reib}(n_{Motor})$) is determined on the basis of a compensation curve.

2. Method according to Claim 1,
   **characterized**
   **in that** the compensation curve is a compensation line.

3. Method according to Claim 1,
   **characterized**
   **in that** the compensation curve is a higher-order polynomial.

4. Method according to one of Claims 1 to 3,
   **characterized**
   **in that** the motor torque constant $k_M$ is initially determined in order to calculate the no-load frictional torque ($M_{reib}$).

5. Method according to Claim 4,
   **characterized**
   **in that**, in the case of a DC current motor, the motor torque constant $k_M$ is calculated using the following formula:

$$k_M = \frac{U_{EMK}}{2\pi \cdot n_{Motor}}$$

   wherein the motor is started up prior to measuring the generator voltage by applying an operating voltage, the operating voltage is then switched off and the generator voltage $U_{EMK}$ and the rotational speed $n_{Motor}$ are measured after the inductive operating current has subsided.

6. Method according to Claim 4,
   **characterized**
   **in that**, in the case of a 3-phase synchronous motor, the motor torque constant $k_M$ is calculated using the following formula: $k_M = \frac{U_{EMK}}{2\pi \cdot n_{Motor}} \cdot \sqrt{3}$ wherein the motor is initially started up without loading by applying an operating voltage and the operating voltage is then switched off and the generator voltage $U_{EMK}$ is measured after the inductive operating current has subsided, wherein the rotational speed $n_{Motor}$ is able to be determined at the same time from the period duration of the generated generator voltage.

7. Method according to one of the preceding claims,
**characterized**
**in that** the measured generator voltage ($U_{EMK}$) of the motor, the calculated no-load frictional torque and/or possibly the calculated motor torque constant are subjected to a plausibility check prior to using the instrument (1).

8. Method according to Claim 7,
**characterized**
**in that** the calibration process is repeated if the generator voltage ($U_{EMK}$) of the motor, the determined no-load frictional torque and/or the possibly calculated motor torque constant in each case lie outside of a permissible range.

9. Method according to one of the preceding claims,
**characterized**
**in that** a warning or error notification is output if the generator voltage ($U_{EMK}$) of the motor, the calculated no-load frictional torque and/or possibly the calculated motor torque constant lie outside of a permissible tolerance range.

10. Method according to one of the preceding claims,
**characterized**
**in that** operation of the instrument is prevented if the generator voltage ($U_{EMK}$) of the motor, the calculated no-load frictional torque and/or possibly the calculated motor torque constant lie outside of a permissible tolerance range.

11. Dental system consisting of

- a medical instrument (1) having an electric motor (2) that has means for receiving a tool (5) driven by the motor (2), and
- a supply/control unit (10) for driving the electric motor (2),

wherein the supply/control unit (10) has means that are designed,

a) during a step of calibrating the motor (2) with the received tool (5), to operate at at least one operating point and to determine the following parameters for this operating point:

- the generator voltage ($U_{EMK}$) of the motor (2),
- the rotational speed ($n_{Motor}$) of the motor (2),
- the no-load current consumption ($I_{Motor}$) of the motor (2),

b) to calculate a no-load frictional torque ($M_{reib}$) for the instrument (1) on the basis of the determined parameters, and to take said no-load frictional torque into account as a correction factor when driving the motor (2) during the subsequent operation of the instrument (1),

wherein the means of the supply/control unit (10) are designed, during the step of calibrating the motor (2), to operate at a plurality of operating points and to determine a rotational speed-dependent no-load frictional torque ($M_{reib}(n_{Motor})$) on the basis of the parameters determined at the various operating points,
wherein the rotational speed-dependent no-load frictional torque ($M_{reib}(n_{Motor})$) is determined on the basis of a compensation curve.

**Revendications**

1. Procédé servant à faire fonctionner un moteur électrique (2) d'un instrument médical, lequel présente des moyens servant à loger un outil (5) entraîné par le moteur (2), en particulier un appareil de chirurgie dentaire ou un appareil d'endodontie, dans lequel pendant une étape d'étalonnage, le moteur (2) fonctionne avec un outil (5) logé à au moins un point de fonctionnement et les paramètres suivants sont définis pour ledit point de fonctionnement :

- la tension de générateur (U$_{EMK}$) du moteur (2),
- la vitesse de rotation (n$_{moteur}$) du moteur (2),
- l'absorption de courant en marche à vide (I$_{moteur}$) du moteur (2),

et dans lequel sur la base des paramètres définis, un couple de friction en marche à vide (M$_{friction}$) est calculé pour l'instrument (1), lequel est pris en compte lors du fonctionnement ultérieur de l'instrument (1) en tant que facteur de correction lors du pilotage du moteur (2), dans lequel pendant l'étape d'étalonnage, le moteur (2) fonctionne à plusieurs points de fonctionnement et un couple de friction en marche à vide (M$_{friction}$(n$_{moteur}$)) dépendant de la vitesse de rotation est défini sur la base des paramètres définis pour les différents points de fonctionnement, dans lequel le couple de friction en marche à vide (M$_{friction}$(n$_{moteur}$)) dépendant de la vitesse de rotation est défini sur la base d'une courbe de compensation.

2. Procédé selon la revendication 1,
**caractérisé en ce**
**que** la courbe de compensation est une droite de compensation.

3. Procédé selon la revendication 1,
**caractérisé en ce**
**que** la courbe de compensation est un polynôme de degré supérieur.

4. Procédé selon l'une quelconque des revendications 1 à 3,
**caractérisé en ce**
**que** pour calculer le couple de friction en marche à vide (M$_{friction}$), la constante de couple de moteur k$_M$ est dans un premier temps définie.

5. Procédé selon la revendication 4,
**caractérisé en ce**
**que** dans le cas d'un moteur à courant continu, la constante de couple de moteur k$_M$ est calculée selon la formule

suivante : $k_M = \dfrac{U_{EMK}}{2\pi \cdot n_{Motor}}$, dans lequel le moteur est démarré avant la mesure de la tension de générateur en appliquant une tension de fonctionnement, la tension de fonctionnement est ensuite désactivée et une fois le courant de fonctionnement inductif affaibli, une mesure de la tension de générateur U$_{EMK}$ ainsi que de la vitesse de rotation n$_{moteur}$ est réalisée.

6. Procédé selon la revendication 4,
**caractérisé en ce**
**que** dans le cas d'un moteur synchrone triphasé, la constante de couple de moteur k$_M$ est calculée selon la formule

suivante : $k_M = \dfrac{U_{EMK}}{2\pi \cdot n_{Motor}} \cdot \sqrt{3}$, dans lequel le moteur est dans un premier temps démarré sans contrainte en appliquant une tension de fonctionnement, puis la tension de fonctionnement est désactivée et une fois le courant de fonctionnement inductif affaibli, la tension de générateur U$_{EMK}$ est mesurée, dans lequel la vitesse de rotation n$_{moteur}$ peut être déterminée dans le même temps à partir de la durée de la période de la tension de générateur produite.

7. Procédé selon l'une quelconque des revendications précédentes,
**caractérisé en ce**
**que** la tension de générateur (U$_{EMK}$) mesurée du moteur, le couple de friction en marche à vide calculé et/ou éventuellement la constante de couple de moteur calculée sont soumis avant une utilisation de l'instrument (1) à un contrôle de plausibilité.

8. Procédé selon la revendication 7,
**caractérisé en ce**
**que** l'opération d'étalonnage est répétée si la tension de générateur (U$_{EMK}$) du moteur, le couple de friction en marche à vide déterminé et/ou la constante de couple de moteur éventuellement calculée se situent respectivement en dehors d'une plage admise.

9. Procédé selon l'une quelconque des revendications précédentes,
**caractérisé en ce**
**qu'**une notification d'alerte ou d'erreur est émise si la tension de générateur ($U_{EMK}$) du moteur, le couple de friction en marche à vide calculé et/ou éventuellement la constante de couple de moteur calculée se situent en dehors d'une plage de tolérance admise.

10. Procédé selon l'une quelconque des revendications précédentes,
**caractérisé en ce**
**qu'**un fonctionnement de l'instrument est empêché si la tension de générateur ($U_{EMK}$) du moteur, le couple de friction en marche à vide calculé et/ou éventuellement la constante de couple de moteur calculée se situent en dehors d'une plage de tolérance admise.

11. Système médical dentaire constitué

- d'un instrument (1) médical avec un moteur électrique (2), lequel présente des moyens servant à loger un outil (5) entraîné par le moteur (2), ainsi que
- d'une unité d'alimentation/de commande (10) servant à piloter le moteur électrique (2),

dans lequel l'unité d'alimentation/de commande (10) présente des moyens, lesquels sont réalisés

a) pour faire fonctionner, pendant une étape d'étalonnage, le moteur (2) avec un outil (5) logé à au moins un point de fonctionnement et pour définir pour ces points de fonctionnement les paramètres suivants :

- la tension de générateur ($U_{EMK}$) du moteur (2),
- la vitesse de rotation ($n_{moteur}$) du moteur (2),
- l'absorption de courant en marche à vide ($I_{moteur}$) du moteur (2),

b) pour calculer, sur la base des paramètres définis, un couple de friction en marche à vide ($M_{friction}$) pour l'instrument (1) et pour prendre en compte celui-ci lors du fonctionnement ultérieur de l'instrument (1) en tant que facteur de correction lors du pilotage du moteur (2),

dans lequel les moyens de l'unité d'alimentation/de commande (10) sont réalisés pour faire fonctionner, pendant l'étape d'étalonnage, le moteur (2) à plusieurs points de fonctionnement et pour définir un couple de friction en marche à vide ($M_{friction}(n_{moteur})$) dépendant de la vitesse de rotation sur la base des paramètres définis pour les différents points de fonctionnement,
dans lequel le couple de friction en marche à vide ($M_{friction}(n_{moteur})$) dépendant de la vitesse de rotation est défini sur la base d'une courbe de compensation.

Fig. 1

Fig. 2

**IN DER BESCHREIBUNG AUFGEFÜHRTE DOKUMENTE**

**In der Beschreibung aufgeführte Patentdokumente**

- DE 102007020068
- EP 2030588 A

- EP 2421146 A
- WO 2008135138 A1